# EUROPEAN PATENT SPECIFICATION

(11) **EP 1 555 175 B1**
(45) Date of publication and mention of the grant of the patent: **02.08.2006**
(21) Application number: 04386034.5
(22) Date of filing: 21.12.2004
(51) Int. Cl.: B60R 25/04, B60R 25/10

(54) **Protection of automobiles against theft with the use of the hand brake or the brake**
Diebstahlsicherung für Kraftfahrfahrzeuge unter Verwendung von Hand- oder Fussbremse
Dispositif antivol pour vehicule automobile utilisant le frein à main ou le frein à pied

(30) Priority: 16.01.2004 GR 2004100014
(43) Date of publication of application: 20.07.2005
(73) Proprietor: Kalaitzakis, Stylianos, 186 48 Drapetsona, Pireas (GR)
(72) Inventor: Kalaitzakis, Stylianos, 186 48 Drapetsona, Pireas (GR)

(56) References cited:
- US-A- 3 850 260
- US-A- 5 912 615
- US-B1- 6 206 130

## Description

This invention relates to a system aiming at the protection of automobiles against theft by obstructing the flow of petrol or electrical current with the use of the handbrake or the brakes.

This system eliminates the possibility that the automobile is started, if someone isolates the alarm system of the vehicle and enters into it. In order that the automobile is started, the system must be isolated with a key.

The special technical field of the invention is the method of immobilization of the vehicle, which is different than those that are currently being applied.

According to the technical applications known so far by the inventor, the immobilization of the automobile is achieved by locking the doors with a remote control unit and with the simultaneous cut-off of the electrical current or of the petrol, or both. However, if the mechanism is isolated, all its functions are simultaneously isolated, as well.

The features of similar systems for the protection of automobiles against theft, known to the inventor, are:

Simultaneous locking of the doors of the vehicle and cut-off of the supply of electrical current or petrol by pressing a button of a remote control unit, which is known to be forged by finding the frequency of the receiver, with the use of a multi - frequency remote control unit. The above system is de-activated as a whole, by the inverse use of the remote control unit (i.e., it is not polymorphic).

US-A-3 850 260 discloses an anti-theft system comprising an ignition switch and a concealed switch member which need both to be closed in order to allow starting the vehicle engine. The driver may leave the vehicle running when exiting. Theft protection is achieved by opening the concealed switch member. With this concealed switch member open, depressing the brake pedal will kill the engine. Along with depressing the brake pedal, releasing the hand brake will hilt the engine as well.

The system proposed by the inventor is not activated and de-activated with the use of a remote control unit which is forgeable, but with the use of a switch and a key, for which no master or replica key can be made. Furthermore, this system is fitted in a position of the cabin, which is not easily visible.

According to the present invention, as defined by the claims if someone manages to isolate the existing alarm of the automobile and enters the vehicle with the use of some other key, then it will possible to start the vehicle. According to the implementation of the present invention, the vehicle will not move at all when two principal functions of the car are activated: a) the hand brake is released and; b) the brakes are pressed.

In more detail:
a) If the driver has omitted to engage the hand brake, then the engine will not start at all. If the hand brake is engaged, the engine is set into operation; then, when the hand brake is released in order to start driving, the engine switches off and cannot be switched on again, even if the hand brake is re-engaged.
b) The second parameter of the invention concerns the brakes. When someone manages to start the engine of the automobile and then attempts to press the brake pedal, then the engine switches off again and cannot be restarted.
c) Finally, according to the third parameter of the invention, it is possible to understand if someone attempted theft of the automobile. This is achieved as follows: with the activation of the security system, a red LED is switched on, indicating the operation of the system. When a key is entered to start the engine and an attempt is made to start the engine without de-activation of the system, then a green LED is switched on, next to the red one, which is not switched off, even if the key is removed from the engine switch, proving that someone attempted to forge the vehicle.

The above analyses a re-verified with the detailed and analytical drawings attached.

It is evident that this invention can be applied to the field of the automobile industry.

According to the application of the present invention, the system is in operation and the red led is lit. The key is introduced to the engine start switch and turned. Immediately, the green led is switched and remains lit along with the red one, even if the key is removed from the engine switch. This is the indication that proves that someone attempted to forge the system. The two LEDs will be switched off when the system is set off operation, with the use of the special key of the security switch.

The system is re-activated with the hand brake disengaged. Attempting to set the engine of the vehicle into operation is meaningless, as the motor will not start (the engine will be switched on).

Raising the hand brake and activating the system will secure the vehicle. When the vehicle is forged, the engine will be started normally and will be stopped as soon as the hand brake is released in order to start moving the vehicle, as the electricity and petrol supply are cut-off and will not start again when the hand brake is re-engaged. In this manner, the system is blocked and the automobile cannot be started. In order to unblock the system, the security switch must be set into the off position, with the use of our key.

As mentioned above, when the handbrake is raised (engaged) the vehicle is normally set into operation. However, when the brake pedal is pressed, the supply of electrical current and petrol are again disrupted and the engine of the vehicle is switched off and cannot be re-started.

Briefly, with the use of this system the supply of electrical current and petrol are interrupted, resulting in immobilizing completely the vehicle, before the latter moves at all.

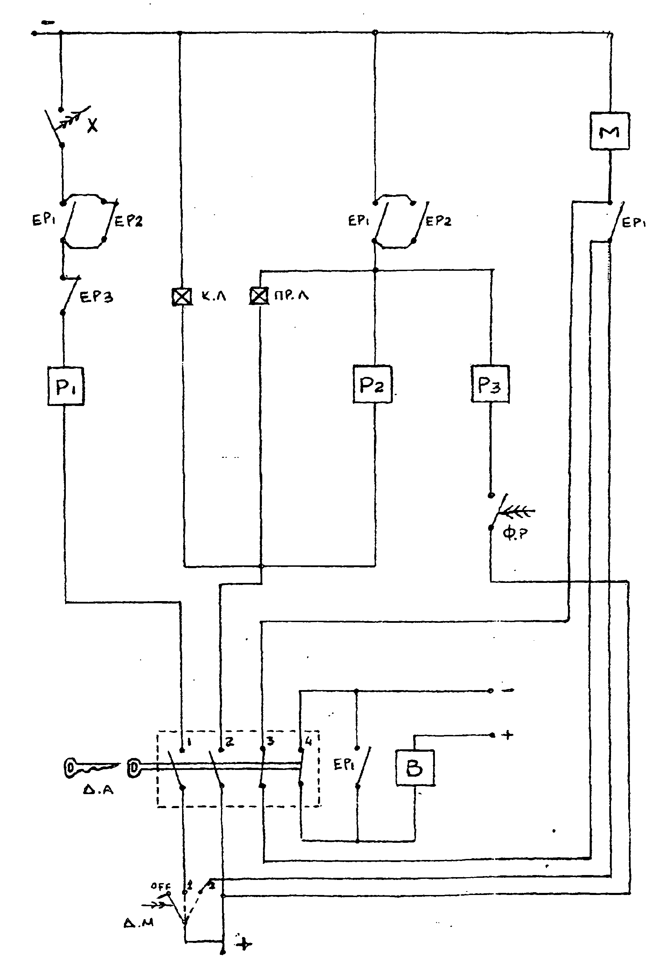

### Analysis of the Drawing

The drawing represents the system in idle mode (de-activated)

### 1. Description of the Operation of the vehicle with the security switch in the Off position

The security switch is in the Off position, the contacts 1 and 2 are open and the contacts 3 and 4 are closed. We turn the engine switch to the On position. The (+) positive charge passes through the engine switch, position 2, rises to the EP1 Contact, finds it open and then descends. Then, the positive (+) charge rises to the engine switch (M), takes the negative (-) charge from the top, and the engine switch operates.

Furthermore, flow passes via the petrol pump (B), as the negative charge (-) exists via contact 4 of the security switch, reaches the pump (B), which has the positive charge (+), in which case petrol flow exists, the engine switch is operative and the vehicle can be started.

### 2. Description of the Operation of the vehicle with the security switch in the On position

The security switch is set to the on position, with the use of the key, the contacts 1 and 2 are closed and the contacts 3 and 4 are opened. The red Led is lit, indicating that the system is operative. The positive charge (+) passes via contact No 2 of the Security Switch and reaches the Led (which has the negative charge (-) from the top, and is thus lit.

When the hand brake is raised (engaged) the contact X (that corresponds to the hand-brake) is shut, the negative charge (-) passes through it and reaches the closed contact EP2 through which it passes to the closed contact EP3 and then reaches P1. P1 will be charged, when the key is introduced and the engine switch is turned in order to start the engine of the vehicle. Then, the positive charge (+) will pass via the engine switch to the position No 1, and via the security switch of the contact, it will reach P1. Then, P1 has both the positive (+) and negative (-) and is then charged. When P1 is charged, the open contact on top of it EP1 is shut, as a self-retention. Furthermore, all the open contacts EP1 are shut. A number of four (4) such contacts exist.

On top of P2, an open contact EP1 exists, parallel to an open contact EP2, in which case P2 goes negative (-) via the contact EP1 and receives the positive (+) from below, via the contact No 2 of the security switch which is shut. By charging the contact P2, EP2 is shut as self-retention and the closed contact EP2, located next to EP1 and under the contact X (handbrake, is opened. In this case, the green Led is also lit, thus both LEDs are lit, indicating that the engine switch has been forged. These two LEDs will remain lit, even when the key is removed from the engine switch and until the security switch is set to the Off position.

Also, the EP1 contact located under the engine switch (M) has been shut, in which case the positive charge (+) leaves from position no 2 of the engine switch and via the contact EP1 reaches the engine switch which receives the negative charge (-) from the top and has both (+) positive and negative (-) charge. The contact EP1 located to the petrol pump (B) and which also has both (+) positive and negative (-) charge has also closed and can be operative. Thus, with current at the engine switch (M) and the petrol pump (B), the vehicle is set into operation, though with the hand brake raised.

Thus, with P2 charged, if the hand brake is released or the brake pedal pressed, the engine will be switched off and will not restart, as P2 will remain charged, until the security switch is set to the Off position, in which case EP2 located under the handbrake X remains open.

### Tests

### First Test

The vehicle is started. By releasing the hand brake the negative (-) charge supplied via the handbrake contact to P1 is cut off and the latter is discharged. Hence, the four EP1 contacts open and the petrol supply is automatically cut-off, as EP1 is open and thus the vehicle engine stops running. The electrical current to the switch (M) is also cut -off and the vehicle cannot be re-started, even if the handbrake is re-engaged, as the contact EP2 located under the contact X (Handbrake) does not permit the negative charge (-) to reach the relay P1 and to discharge, as the contacts 3 and 4 of the security Switch are open and, thus, both circuits are open.

### Second Test

If for some reason the handbrake does not operate and the engine is set into operation in the normal way as above, when the brake pedal is pressed, the positive charge (+) reaches P3, the negative charge is also supplied to P3 by P2 which is permanently charged, in which case P3 is also charged. Thus, by charging P3, the closed contact EP3 located under P1 also opens and cuts off the negative charge (-) that was directed towards P1, in which case it is discharged and opens again all the contacts EP1, resulting to the same result, as EP1, located under the handbrake, also opens and EP2 which is located next to it (as P2 is charged), in which case the negative charge (-) cannot reach the coil P1.

Thus, we have the same result as with the case of the handbrake. This is because if the brake pedal is released, P3 is recharged, it closed the EP3 contact again, having though opened under it the EP1 contact above it which does not allow the negative charge (-) to drift lower, as the contact EP2 located next to the contact EP1 remains open, as P2 remains always charged and holds EP2 open.

### Key to the Drawing

P1 Relay switch No 1
P2 Relay switch No 2
P3 Relay switch No 3
M Engine start switch
Δ.A. Security Switch
B Petrol Pump
ΠP.A Green LED
K.A Red LED
X 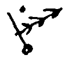 Handbrake contact
ΦP 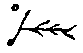 Brake pedal contact
Δ.A. 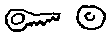 Security Switch with key
Δ.M 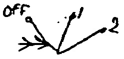 Engine start switch
(-) Negative Pole of the Battery
(÷) Positive Pole of the Battery
EP1 Contact of the Relay switch No 1
EP2 Contact of the Relay switch No 2
EP3 Contact of the Relay switch No 3
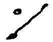 Contact of the Relay switch open at idle status
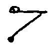 Contact of the Relay switch closed at idle status

## Claims

1. A thaft protection system for a vehicle with the following features :
a) the system is activated prior to the exit of the driver from the automobile, with the use of a switch key located in a non-visible position, and an LED is lit indicating the activation of the system
b) when somebody enters into the vehicle, by isolating the alarm that already exists or by forging some window of the vehicle, the automobile does not start when the handbrake is released,
c) when the handbrake is engaged (raised), the vehicle engine is set into operation and is stopped when the handbrake is released and cannot re-start ads the supply of electric contact to the engine start switch and of petrol to the petrol pump have been interrupted, and
d) when the hand brake is not engaged for some reason, the engine will be started and will be subsequently stopped when the brake pedal is pressed, because the supply of electric contact to the engine start switch and of petrol to the petrol pump have been interrupted.

2. The system of claim 1, wherein, as the vehicle has not finally moved, a green LED is lit next to the red one and remains lit along with it, as an indication of an attempt to forge the vehicle.

3. The system of claim 2, wherein, when the system is de-activated, the LEDs are switched off

## Patentansprüche

1. Ein System gegen den Fahrzeugdiebstahl mit den folgenden Merkmalen:
a) das System wird vor dem Aussteigen des Fahrers aus dem Fahrzeug durch einen Schlüsselschalter aktiviert, der in einer unsichtbaren Stelle installiert ist, und eine rotte LED (Leuchtdiode) leuchtet als Anzeige der Aktivierung des Systems auf.
b) bricht jemand ins Fahrzeug ein, indem er die schon bestehende Alarmanlage ausschaltet oder eine Scheibe des Fahrzeugs einschlägt, so startet das Fahrzeug nicht, wenn die Handbremse gelöst ist.
c) ist die Handbremse angezogen, so startet der Motor und stoppt sobald die Handbremse gelöst wird; er startet nicht wieder, da die Stromzufuhr zum Starter und zur Benzinpumpe unterbrochen ist.
d) ist die Handbremse angezogen, so startet der Motor und stoppt sobald man auf das Bremspedal tritt, da die Stromzufuhr zum Starter und zur Benzinpumpe unterbrochen ist.

2. Das System des Patentanspruchs 1, wobei, nachdem das Fahrzeug doch nicht gefahren ist, eine grüne LED (Leuchtdiode) neben der rotten LED aufleuchtet und als Anzeige des Einbruchversuchs an bleibt.

3. Das System des Patentanspruchs 2, wobei, wenn das System deaktiviert ist, die LEDs erlöschen.

## Revendications

1. Un système anti-vol pour un véhicule, avec les caractéristiques suivantes :
a) le système est activé avant que conducteur ne sorte hors du véhicule, en utilisant un interrupteur avec clé, placé à un endroit non visible et un LED rouge s'aliume pour indiquer l'activation du système.
b) quand quelqu'un entre dans le véhicule, en isolant l'alarme déjà existant ou en forçant une vitre de la voiture, celui-ci ne se met pas en fonctionnement quand le frein à main est levé.
c) quand le frein à main est levé, le moteur fonctionnera et s'arrête quand le frein descend et ne refonctionnera pas, étant donné que l'arrivée de courant au démarreur du moteur et de l'essence à la pompe d'essence ont été interrompus.
d) quand le frein à main est levé, le moteur fonctionnera et sera immédiatement interrompu quand la pédale du frein est enfoncée, parce que l'arrivée de courant au démarreur du moteur et de l'essence à la pompe d'essence ont été interrompus.

2. Le système de l'exigence 1 dans lequel, lorsque le véhicule ne s'est pas mis finalement en mouvement, un LED vert s'allume à côté du rouge et reste allumé avec celui-ci comme indication de tentative d'effraction du véhicule.

3. Le système de l'exigence 2, dans lequel les leds s'éteignent quand le système cesse d'être activé.
